# EUROPEAN PATENT APPLICATION

(11) **EP 4 325 333 A1**
(43) Date of publication of application: **21.02.2024**
(21) Application number: 23189060.9
(22) Date of filing: 01.08.2023
(51) Int. Cl.: G06F 3/01, G06F 3/04815, G06F 3/14, G06T 15/20, G06T 19/00, H04L 67/131, H04N 7/15

(54) **PERSPECTIVE SHARING IN AN ARTIFICIAL REALITY ENVIRONMENT BETWEEN TWO-DIMENSIONAL AND ARTIFICIAL REALITY INTERFACES**

(30) Priority: 18.08.2022 US 202217820641
(71) Applicant: Meta Platforms Technologies, LLC, Menlo Park, CA 94025 (US)
(72) Inventor: YU, Shavonne, Menlo Park (US)
(74) Representative: Murgitroyd & Company

(57) **Abstract**

The technology can allow a second user on a 2D interface to follow a first user using an XR interface in an XR environment, and to view a virtual world from the position of a representation of the first user in the XR environment. Implementations can either give the second user the same viewpoint as the first user, or a different viewpoint pivotable about the position of the representation of the first user in the XR environment. Implementations can display an avatar of the second user in a bubble leashed to the representation of the first user. At any time, the second user can "pop the bubble" to reenable the ability for the representation of the second user to independently move around and interact with the virtual world, without being locked to the representation of the first user.

## Description

### TECHNICAL FIELD

The present disclosure is directed to sharing a perspective of a first user, in an artificial reality (XR) environment on an XR interface, with a second user accessing the XR environment from a two-dimensional (2D) interface.

### BACKGROUND

Users interacting with artificial reality (XR) devices can view content in an artificial reality environment that includes real-world objects and/or two-dimensional (2D) and/or three-dimensional (3D) virtual objects. For example, the artificial reality environment can be a virtual environment depicted by a virtual reality (VR) device showing a set of virtual objects. As another example, the artificial reality environment can a mixed reality environment with real-world objects and virtual objects supplemented over the real-world objects. A user can view the objects in the artificial reality environment and modify content in the artificial reality environment.

Applications can exist that can operate on both XR interfaces and two-dimensional (2D) interfaces. A 2D interface can be a flat surface that can display 2D content, such as objects, graphics, text, etc. For example, a 2D interface can be a web browser or other application on a computer, mobile device, television, or other display device. On the 2D interface, content can be rendered differently than on an XR interface due to the limitations of a 2D interface as compared to a fully immersive XR experience.

### SUMMARY OF INVENTION

In accordance with the invention in a first aspect, a method is provided for sharing a perspective of a first user, in an XR environment on an XR interface, with a second user accessing the XR environment from a 2D interface, the method comprising:
rendering the XR environment on the 2D interface for the second user based on a position of a representation of the second user within the XR environment;
transmitting a request to share the perspective of the first user with the second user on the 2D interface, while a representation of the first user interacts with the XR environment based on input of the first user to an XR device;
receiving first data associated with the perspective of the first user in the XR environment;
rendering the XR environment on the 2D interface for the second user from the perspective of the first user based on the first data;
receiving second data associated with a viewpoint pivotable about a location of the representation of the first user in the XR environment;
rendering the XR environment for the second user on the 2D interface from the viewpoint based on the second data;
receiving input to stop rendering the XR environment based on the first data and/or the second data; and
rendering the XR environment for the second user based on either A) the position of the representation of the second user within the XR environment when the request was transmitted or B) a position of the representation of the first user when the input was received.

In some embodiments, the representation of the second user is unable to interact with the XR environment when the XR environment is rendered for the second user based on the first data or the second data.

In some embodiments, the method further comprises generating the request to share the perspective of the first user with the second user based on a voice command from the second user.

In some embodiments, the method further comprises generating the request to share the perspective of the first user with the second user based on a selection of an option displayed in association with the representation of the first user, when the representation of the second user and the representation of the first user are in a same world in the XR environment.

In some embodiments, the method further comprises generating the request to share the perspective of the first user with the second user based on a selection of an option associated with the first user from a list of available users to follow, when the representation of the second user and the representation of the first user are not in a same world in the XR environment.

In accordance with the invention in a second aspect, a computer-readable storage medium storing instructions that, when executed by a computing system, cause the computing system to perform a process for:
sharing a perspective of a first user, in an XR environment on an XR interface, with a second user accessing the XR environment from a 2D interface, the process comprising:
rendering the XR environment on the 2D interface for the second user based on a position of a representation of the second user within the XR environment;
transmitting a request to share the perspective of the first user with the second user on the 2D interface;
receiving data associated with the perspective of the first user in the XR environment;
rendering the XR environment on the 2D interface for the second user from the perspective of the first user based on the data;
receiving input to stop rendering the XR environment based on the data; and
rendering the XR environment for the second user based on either A) the position of the representation of the second user within the XR environment when the request was transmitted or B) a position of a representation of the first user when the input was received.

In some embodiments, the data is first data, the input is first input, and the process further comprises:
receiving second data associated with a viewpoint pivotable about a location of the representation of the first user in the XR environment;
rendering the XR environment for the second user on the 2D interface from the viewpoint based on the second data; and
receiving second input to stop rendering the XR environment based on the second data.

In some embodiments, the request to share the perspective of the first user with the second user on the 2D interface is transmitted while the representation of the first user interacts with the XR environment based on input of the first user to an XR device.

In some embodiments, the representation of the second user is unable to interact with the XR environment when the XR environment is rendered for the second user based on the data.

In some embodiments, the process further comprises generating the request to share the perspective of the first user with the second user based on a voice command from the second user.

In some embodiments, the process further comprises generating the request to share the perspective of the first user with the second user based on a selection of an option displayed in association with the representation of the first user, when the representation of the second user and the representation of the first user are in a same world in the XR environment.

In some embodiments, the process further comprises generating the request to share the perspective of the first user with the second user based on a selection of an option associated with the first user from a list of available users to follow, when the representation of the second user and the representation of the first user are not in a same world in the XR environment.

In accordance with the invention in a third aspect, a computing system is provided for sharing a perspective of a first user, in an XR environment on an XR interface, with a second user accessing the XR environment from a 2D interface, the computing system comprising:
one or more processors; and
one or more memories storing instructions that, when executed by the one or more processors, cause the computing system to perform a process comprising:
   rendering the XR environment on the 2D interface for the second user based on a position of a representation of the second user within the XR environment;
   transmitting a request to share the perspective of the first user with the second user on the 2D interface;
   receiving data associated with the perspective of the first user in the XR environment;
   rendering the XR environment on the 2D interface for the second user from the perspective of the first user based on the data;
   receiving input to stop rendering the XR environment based on the data; and
   rendering the XR environment for the second user based on either A) the position of the representation of the second user within the XR environment when the request was transmitted or B) a position of a representation of the first user when the input was received.

In some embodiments, the data is first data, the input is first input, and the process further comprises:
receiving second data associated with a viewpoint pivotable about a location of the representation of the first user in the XR environment;
rendering the XR environment for the second user on the 2D interface from the viewpoint based on the second data; and receiving second input to stop rendering the XR environment based on the second data.

In some embodiments, the request to share the perspective of the first user with the second user on the 2D interface is transmitted while the representation of the first user interacts with the XR environment based on input of the first user to an XR device.

In some embodiments, the representation of the second user is unable to interact with the XR environment when the XR environment is rendered for the second user based on the data.

In some embodiments, the process further comprises generating the request to share the perspective of the first user with the second user based on a voice command from the second user.

In some embodiments, the process further comprises generating the request to share the perspective of the first user with the second user based on a selection of an option displayed in association with the representation of the first user, when the representation of the second user and the representation of the first user are in a same world in the XR environment.

In some embodiments, the process further comprises generating the request to share the perspective of the first user with the second user based on a selection of an option associated with the first user from a list of available users to follow, when the representation of the second user and the representation of the first user are not in a same world in the XR environment.

In some embodiments, the computing system further comprises a flat-panel display providing the 2D interface.

In some embodiments, the media of the second aspect and the system of the third aspect perform the method of the first aspect, and preferred features and exemplifications of each aspect will be understood to apply to other aspects by analogy.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used by a 2D device in some implementations of the present technology for sharing a perspective of a user, in an XR environment on an XR interface, with a user accessing the XR environment from a 2D interface.
Figure 6 is a flow diagram illustrating a process used by a server in some implementations of the present technology for facilitating sharing a perspective of a user, in an XR environment on an XR interface, with a user accessing the XR environment from a two-dimensional (2D) interface.
Figure 7 is a conceptual diagram illustrating an example of a view of a third user accessing an XR environment on a 2D interface, the view including a representation of a first user accessing the XR environment from an XR interface and a representation of a second user accessing the XR environment from a 2D interface.
Figure 8 is a conceptual diagram illustrating an example of a view of a third user accessing an XR environment on a 2D interface, the view including a representation of a first user accessing the XR environment from an XR interface while sharing his perspective with a second user on a 2D interface.
Figure 9 is a conceptual diagram illustrating an example of a view of a second user viewing an XR environment on a 2D interface, the view being pivotable about a location of a representation of a first user accessing the XR environment from an XR interface and including a representation of a third user accessing the XR environment on a 2D interface.
Figure 10 is a conceptual diagram illustrating an example of a view of a third user accessing an XR environment on a 2D interface, the view including a representation of a first user accessing the XR environment from an XR interface and a representation of a second user accessing the XR environment from a 2D interface when the second user stops following the first user.
Figure 11 is a conceptual diagram illustrating an example of a view of a second user accessing an XR environment on a 2D interface, the view including a representation of a first user accessing the XR environment from an XR interface while sharing his perspective with third and fourth users on respective 2D interfaces.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to sharing a perspective of a first user (an "XR user"), in an artificial reality (XR) environment on an XR interface, with a second user accessing the XR environment from a two-dimensional (2D) interface. The technology can allow the second user on the 2D interface to follow a representation of the XR user on an XR interface and to view an XR environment from the position of the representation of the XR user. Implementations can either give the second user on the 2D interface the same viewpoint as the user on the XR interface, or a different viewpoint pivotable about the position of the representation of the XR user on the XR interface, within the XR environment. Implementations can display an avatar of the user of the 2D interface in a bubble leashed to the representation of the XR user of the XR interface. At any time, the user on the 2D interface can "pop the bubble" to reenable the ability to virtually move around independently and interact with the virtual world, without being locked to the representation of the XR user on the XR interface. When the bubble is popped, implementations can place the representation of the user on the 2D interface at her last location in the virtual world prior to following the representation of the XR user on the XR interface, or at a location proximate to the representation of the XR user on the XR interface.

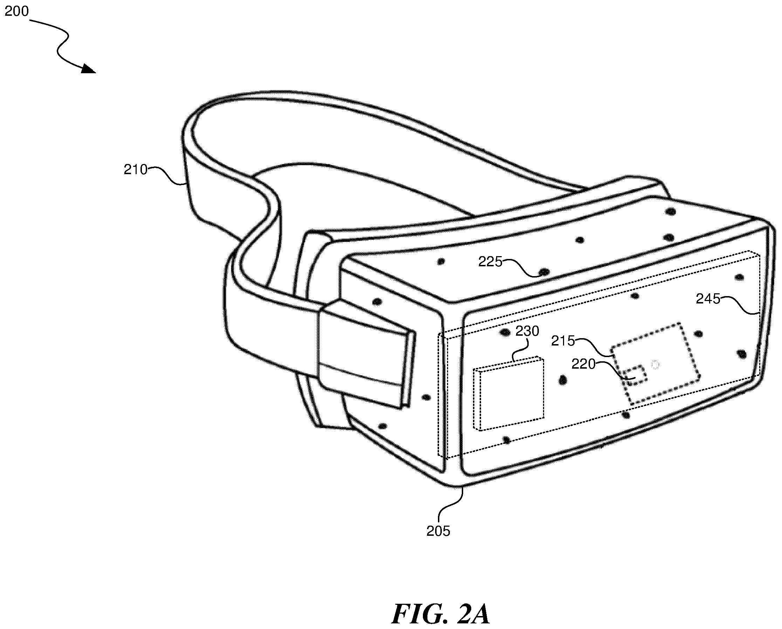

As used herein, an "XR interface" can be a device capable of displaying a fully immersive XR experience, such as a head-mounted display within an XR system. In some implementations, the XR system can include devices and components other than the XR interface to support the XR experience, such as processing components, input/output devices (e.g., controllers), etc. Such components are described further herein with respect to Figures 2A-2C.

A "2D interface" can be an application or device that can render an XR environment on a 2D surface. For example, a 2D interface can be a computer screen, television display, mobile device (e.g., cellular phone), mobile application, web browser, etc. The 2D interface can be part of a 2D system including other devices and components, such as processing components, input/output devices, etc. Although described herein as a user of an XR interface sharing his view with a user on a 2D interface, it is contemplated that a user of a 2D interface can conversely share her view with a user of an XR interface, which could be represented as a television screen, a view cone of what the user of the 2D interface is looking at (although seen in 3D by the user of the XR interface), etc.

An "avatar bubble" can be any shape that is of sufficient size to encompass at least a portion of an avatar of a user, i.e., a virtual icon or figure representing a user. In some implementations, the avatar bubble associated with a following user can be displayed proximate to a representation of a followed user (e.g., floating next to the followed user), such that other users in an XR environment can visually understand that the following user is fixed or tied to the followed user. Although described herein as an avatar bubble, it is contemplated that a following user can alternatively or additionally be represented textually, e.g., as "User 1", and/or that the followed user can alternatively or additionally be represented textually, e.g., "User 1 is following User 2."

In some cases, a new user accessing an XR environment from a 2D interface can have difficulty with platforming and finding the right path within a virtual world. To resolve this with the disclosed technology, the new user can request to follow a friend accessing the XR environment from an XR interface, who can have better peripheral vision of the virtual world, or who is more familiar with the virtual world or XR environments in general.

In another example, a user can access an XR concert from a mobile phone with a friend who is accessing the concert on an XR device. The user can receive a food delivery and want to eat while she watches the concert. Thus, the user can follow her friend on her mobile phone so she can stay with him while her hands are off of the mobile phone.

In still another example, a user can be in an XR escape room on a web browser. The representation of the user's friend can be on the other side of the virtual room (accessed from an XR device) and want the user's opinion on the puzzle she's working on. The friend can share her perspective with the user on the web browser.

In yet another example, a user can access a team game on a 2D device. A friend accessing the team game on an XR device can share her perspective to navigate through an obstacle course filled with puzzles, while each team member takes turns solving one, much like passing a baton.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

When visiting an XR environment from a 2D interface (e.g., an application on a mobile device), it can be difficult to navigate as easily as someone on an XR interface (e.g., a head-mounted display), for example because a user on an XR interface can have better peripheral vision of the environment, more immersive controls, etc. Thus, on a 2D interface, it can be more difficult for a user to find an entrance, a particular virtual object, to move between virtual worlds, etc. In addition, although a user on an XR interface can share his view with another user on an XR interface, it is likely to cause motion sickness for the following user.

Implementations disclosed herein allow a user on a 2D interface to follow a user on an XR interface through environments that can be more XR-friendly, resulting in improved efficiency and an improved user experience which is less likely to cause motion sickness. Although conventional systems can provide one-way static sharing or livestreaming of content, implementations allow the user on the 2D interface to stop following the user on the XR interface at any point and resume independent interaction with the XR environment.

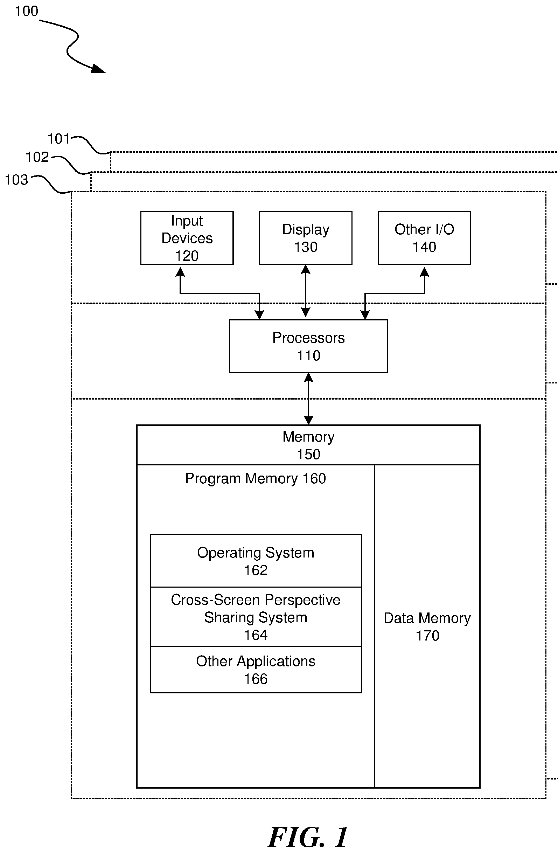

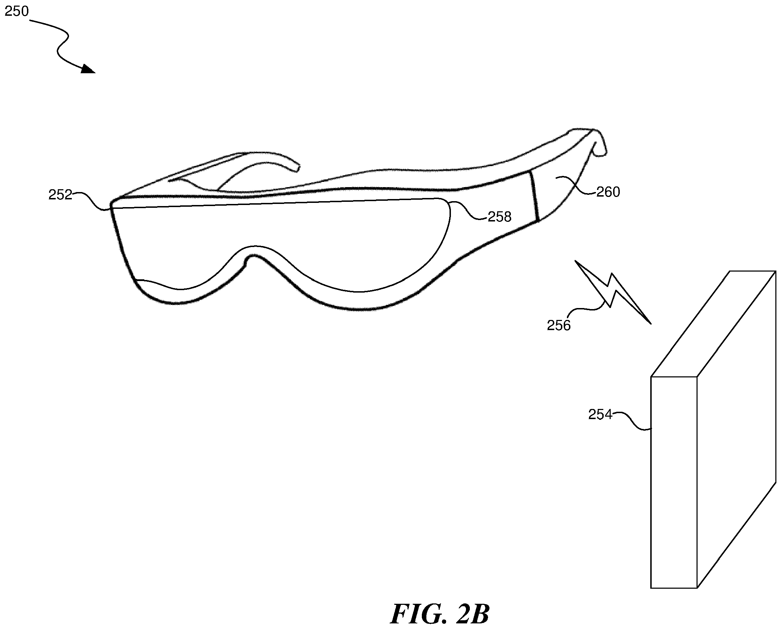

Several implementations are discussed below in more detail in reference to the figures. Figure 1 is a block diagram illustrating an overview of devices on which some implementations of the disclosed technology can operate. The devices can comprise hardware components of a computing system 100 that share a perspective of a first user, in an artificial reality (XR) environment on an XR interface, with a second user accessing the XR environment from a two-dimensional (2D) interface. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, cross-screen perspective sharing system 164, and other application programs 166. Memory 150 can also include data memory 170 that can include, e.g., rendering data, environment data, position data, perspective data, viewpoint data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

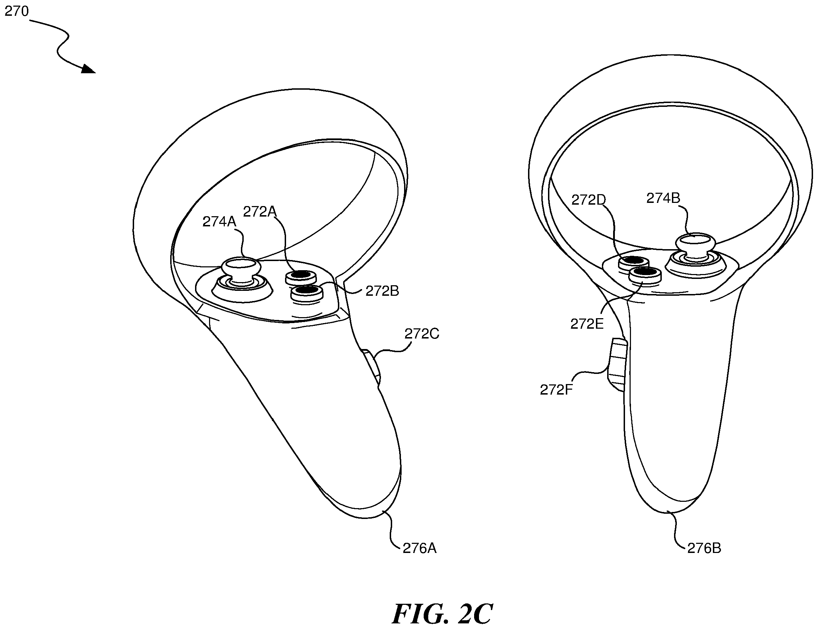

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

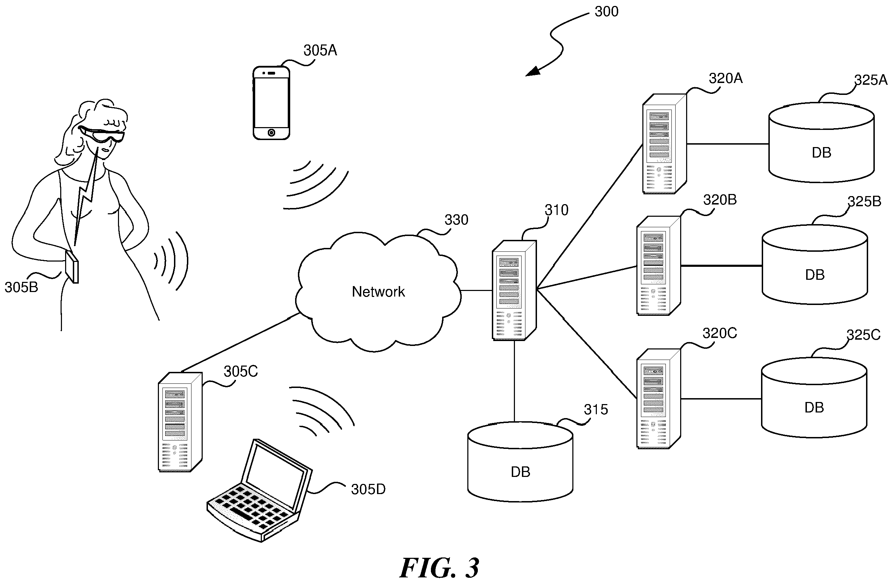

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

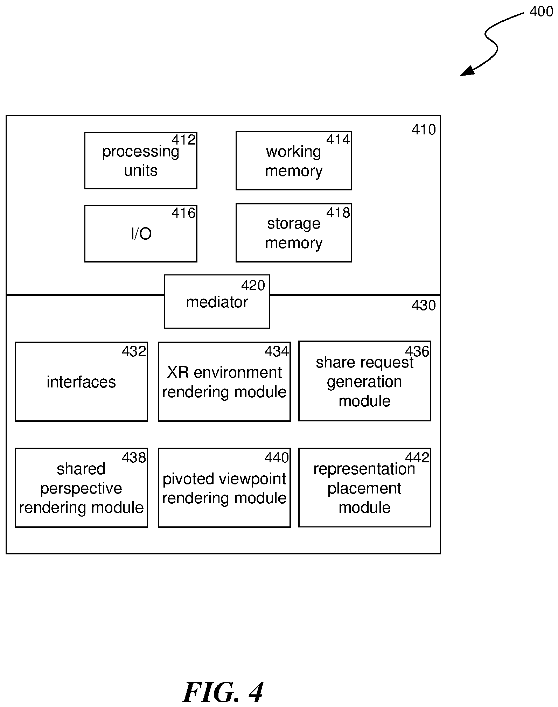

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, I/O 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for sharing a perspective of a first user, in an artificial reality (XR) environment on an XR interface, with a second user accessing the XR environment from a two-dimensional (2D) interface. Specialized components 430 can include XR environment rendering module 434, share request generation module 436, shared perspective rendering module 438, pivoted viewpoint rendering module 440, representation placement module 442, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

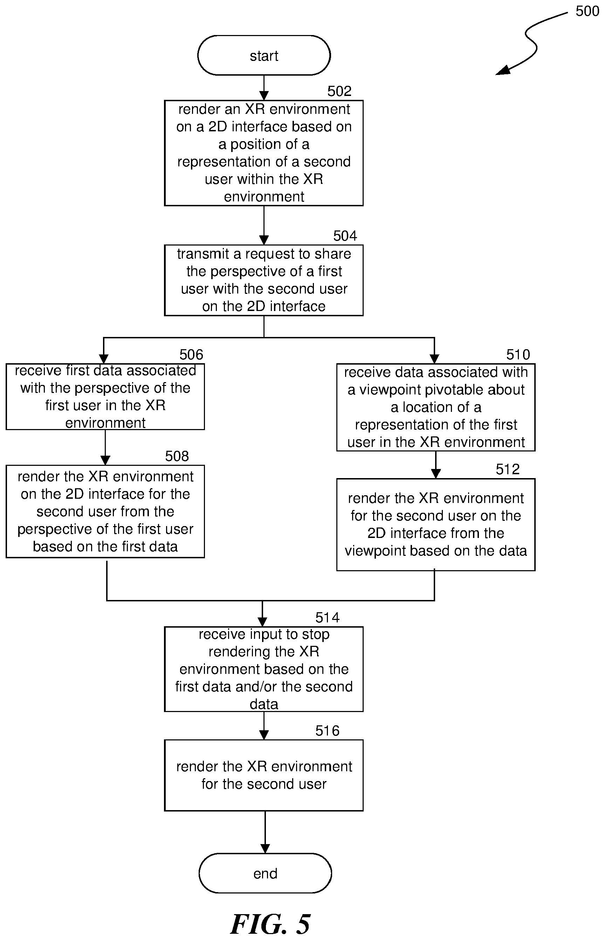

XR environment rendering module 434 can render an XR environment for a first user on a 2D interface ("a second user") based on a position of a representation of the second user within the XR environment. The second user can control and change the position of her representation via I/O devices 416 (e.g., a controller, a mouse, a keyboard, a microphone, a camera, etc.) and interfaces 432, for example. Based on this input, XR environment rendering module 434 can render the XR environment for the 2D interface based on where the second user has directed her representation to go in the XR environment, what her representation is doing in the XR environment, where her representation is facing in the XR environment, etc., with respect to virtual objects and backgrounds within the XR environment. Further details regarding rendering of the XR environment on the 2D interface are described herein with respect to block 502 of Figure 5.

Share request generation module 436 can receive input from the second user requesting to share the perspective of a user accessing the XR environment from an XR interface ("a first user") with the second user on the 2D interface. Share request generation module 436 can receive the input via I/O devices 416 (e.g., a controller, a mouse, a keyboard, a microphone, a camera, etc.) and interfaces 432, for example. Share request generation module 436 can translate the input request into a format readable by a server hosting scripts and data bundles needed to process and render the XR environment, and can transmit the request to the server.

In some implementations, share request generation module 436 can generate the request to share the perspective of the first user with the second user based on a voice command from the second user. For example, a microphone collocated with or proximate to the 2D interface can detect an audio signal including a command, e.g., "follow Player 123." One or more processors can perform speech recognition and/or natural language analysis on the audio signal in order to understand and process the command and translate it into a request for the second user to follow Player 123 on the 2D interface.

In some implementations, share request generation module 436 can generate the request to share the perspective of the first user with the second user based on a selection of an option displayed in association with the representation of the first user, when the representation of the second user and the representation of the first user are in a same world in the XR environment. In some implementations, when the representation of the first user within the XR environment is within the field-of-view of the second user and/or within a predetermined distance of the representation of the first user, share request generation module 436 can render a button, graphic, switch, pop-up, etc. that can cause share request generation module 436 to generate the request to share the perspective of the first user. For example, share request generation module 436 can render a button proximate to the representation of the first user that says "Follow Player 123." Share request generation module 436 can generate the request to share the perspective of the first user based on selection of the button by the second user.

In some implementations, share request generation module 436 can generate the request to share the perspective of the first user with the second user based on a selection of an option associated with the first user from a list of available users to follow, when the representation of the second user and the representation of the first user are not in a same world in the XR environment. For example, share request generation module 436 can display a list of all users in a different virtual world (or a subset thereof, such as only those users that are available to follow, e.g., users on XR interfaces). Share request generation module 436 can then receive a selection of an option to follow the first user from the 2D interface associated with the second user. Share request generation module 436 can generate the request to share the perspective of the first user based on selection of the option by the second user. Further details regarding generating the request to share the perspective of a first user with a second user are described herein with respect to block 504 of Figure 5.

Shared perspective rendering module 438 can receive data ("first data") associated with the perspective of the first user in the XR environment. Shared perspective rendering module 438 can render the XR environment on the 2D interface for the second user from the perspective of the first user based on the first data. In some implementations, while shared perspective rendering module 438 is rendering the XR environment for the second user from the perspective of the first user, shared perspective rendering module 438 can remove the representation of the second user from the XR environment, make the representation darker or faded in the XR environment, make the representation static in the XR environment, etc. In some implementations, while shared perspective rendering module 438 is rendering the XR environment for the second user from the perspective of the first user, shared perspective rendering module 438 can render an avatar of the second user in a bubble or other virtual object floating on or near the representation of the first user. In some implementations, shared perspective rendering module 438 can share the perspective of the first user with the second user across different virtual worlds in the XR environment, or across different instances of the same virtual world in the XR environment. Further details regarding rendering the XR environment for the second user based on the perspective of the first user are described herein with respect to blocks 506 and 508 of Figure 5.

Pivoted viewpoint rendering module 440 can receive data ("second data") associated with a viewpoint pivotable about a location of a representation of the first user in the XR environment. The second data can be data needed to render the XR environment for the second user on the 2D interface based on a viewpoint different than the first user, but anchored to the location of the first user. For example, the second user can have a viewpoint on either side of the first user and/or behind the first user. Pivoted viewpoint rendering module 440 can receive this second data in lieu of data needed to render the XR environment for the second user based on the representation of the second user's last position within the XR environment, and/or in lieu of the first data. Pivoted viewpoint rendering module 440 can render the XR environment for the second user on the 2D interface from the viewpoint based on the second data.

In some implementations, while pivoted viewpoint rendering module 440 is rendering the XR environment for the second user from the pivotable viewpoint, pivoted viewpoint rendering module 440 can remove the representation of the second user from the XR environment, darken or fade the representation of the second user in the XR environment, make the representation of the second user static in the XR environment, etc. In some implementations, while pivoted viewpoint rendering module 440 is rendering the XR environment for the second user from the pivotable viewpoint, pivoted viewpoint rendering module 440 can render an avatar of the second user in a bubble or other virtual object floating on or near the representation of the first user. Further details regarding rendering a pivoted viewpoint are described herein with respect to blocks 510 and 512 of Figure 5.

Representation placement module 442 can receive input to stop rendering the XR environment according to the first data (i.e., to stop sharing the perspective of the first user with the second user on the 2D interface), and/or to stop rendering the XR environment according to the second data (i.e., to stop sharing the viewpoint pivotable about the location of the representation of the first user on the 2D interface). Representation placement module 442 can receive the input via I/O devices 416 (e.g., a controller, a mouse, a keyboard, a microphone, a camera, etc.) and interfaces 432, for example. In some implementations, representation placement module 442 can render the XR environment for the second user based on the position of the representation of the second user within the XR environment when the request to share the first user's perspective was transmitted, i.e., where the representation of the second user was located before the second user followed the first user. In some implementations, representation placement module 442 can render the XR environment for the second user based on a position of the representation of the first user when the input to stop rendering the XR environment according to the first data and/or the second data was received, i.e., where the representation of the first user was located when the second user stopped following the first user. Further details regarding placement of the representation of the second user in the XR environment are described herein with respect to blocks 514 and 516 of Figure 5.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for sharing a perspective of a first user, in an XR environment on an XR interface, with a second user accessing the XR environment from a 2D interface. In some implementations, block 502 of process 500 can be performed as a response to the second user accessing the XR environment from the 2D interface, while blocks 504-514 can be performed in response to request from the second user to share the perspective of the first user accessing the XR environment on the XR interface, with the second user accessing the XR environment on the 2D interface.

In some implementations, process 500 can be executed by the 2D interface and/or other device(s) within a 2D system that are in communication with the 2D interface. In some implementations, process 500 can be executed by cross-screen perspective sharing system 164 of Figure 1. In some implementations, some steps of process 500 can be performed on a server, while other steps of process 500 can be performed locally on a 2D device. Although illustrated as having only one iteration, it is contemplated that process 500 (or any portion thereof) can be performed multiple times, repeatedly, consecutively, concurrently, in parallel, etc., as requests to share the perspective of a first user with the second user are received.

At block 502, process 500 can render the XR environment on the 2D interface for the second user based on a position of a representation of the second user within the XR environment. For example, the second user can control and change the position of her representation via various input/output devices and interfaces, such as a controller, a mouse, a keyboard, a microphone, a camera, etc. Based on this input, process 500 can render the XR environment based on where the second user has directed her representation to go in the XR environment, what her representation is doing in the XR environment, where her representation is facing in the XR environment, etc., with respect to virtual objects and backgrounds within the XR environment.

At block 504, process 500 can transmit a request to share the perspective of the first user with the second user on the 2D interface. In some implementations, the representation of the first user can be interacting with the XR environment based on input of the first user to an XR device when process 500 transmits the request. For example, the representation of the first user can be moving in the XR environment, interacting with virtual objects in the XR environment, performing tasks in the XR environment, etc. In some implementations, process 500 can generate the request to share the perspective of the first user with the second user based on a voice command from the second user. For example, a microphone collocated with or proximate to the 2D interface can detect an audio signal including a command, e.g., "follow Player 123." One or more processors can perform speech recognition and/or natural language analysis on the audio signal in order to understand and process the command and translate it into a request for the second user to follow Player 123 on the 2D interface.

In some implementations, process 500 can generate the request to share the perspective of the first user with the second user based on a selection of an option displayed in association with the representation of the first user, when the representation of the second user and the representation of the first user are in a same world in the XR environment. In some implementations, when the representation of the first user within the XR environment is within the field-of-view of the second user and/or within a predetermined distance of the representation of the first user, process 500 can render a button, graphic, switch, pop-up, etc., the selection of which can cause process 500 to generate the request to share the perspective of the first user. For example, process 500 can render a button proximate to the representation of the first user that says "Follow Player 123." Process 500 can generate the request to share the perspective of the first user based on selection of the button by the second user.

In some implementations, process 500 can generate the request to share the perspective of the first user with the second user based on a selection of an option associated with the first user from a list of available users to follow, when the representation of the second user and the representation of the first user are not in a same world in the XR environment. For example, while the representation of a first user is in a virtual world, the representation of the second user can be in a virtual lobby. Process 500 can display a list of all users in the virtual world (or a subset thereof, such as only those users that are available to follow, e.g., users on XR interfaces). Process 500 can then receive a selection of an option to follow the first user from the 2D interface associated with the second user. Process 500 can generate the request to share the perspective of the first user based on selection of the option by the second user.

Process 500 can continue to blocks 506-508 and/or blocks 510-512 consecutively with either set of blocks being performed first, and/or can switch repetitively between blocks 506-508 and blocks 510-512 as the second user changes her viewpoint. In some implementations, blocks 506-508 can be performed without blocks 510-512, and vice versa, either once or repetitively as the second user continues to follow the first user and as the representation of the first user moves about the XR environment.

At block 506, in response to the request to share the perspective of the first user with the second user, process 500 can receive data ("first data") associated with the perspective of the first user in the XR environment. The first data can be data needed to render the XR environment for the second user on the 2D interface based on the viewpoint of the first user in the XR environment. Process 500 can receive this first data in lieu of data needed to render the XR environment for the second user based on the representation of the second user's last position within the XR environment.

At block 508, process 500 can render the XR environment on the 2D interface for the second user from the perspective of the first user, based on the first data. In some implementations, when process 500 renders the XR environment for the second user based on the first data, the representation of the second user is unable to interact with the XR environment, such that the second user can merely view the perspective of the first user. In some implementations, while process 500 is rendering the XR environment for the second user from the perspective of the first user, the representation of the second user can disappear from the XR environment, become darkened or faded in the XR environment, become static in the XR environment, etc. In some implementations, while process 500 is rendering the XR environment for the second user from the perspective of the first user, process 500 can render an avatar of the second user in a bubble or other virtual object floating on or near the representation of the first user.

At block 510, process 500 can receive data associated with a viewpoint pivotable about a location of the representation of the first user in the XR environment ("second data"). The second data can be data needed to render the XR environment for the second user on the 2D interface based on a viewpoint different than the first user, but anchored to the location of the first user. For example, the second user can have a viewpoint on either side of the first user and/or behind the first user. Process 500 can receive this second data in lieu of data needed to render the XR environment for the second user based on the representation of the second user's last position within the XR environment, and/or in lieu of the first data.

At block 512, process 500 can render the XR environment for the second user on the 2D interface from the viewpoint based on the second data. In some implementations, when process 500 renders the XR environment for the second user based on the second data, the representation of the second user is unable to interact with the XR environment, such that the second user can merely have a viewpoint pivotable about the location of the representation of first user without taking any action other than changing viewpoints. In some implementations, while process 500 is rendering the XR environment for the second user from the pivotable viewpoint, the representation of the second user can disappear from the XR environment, become darkened or faded in the XR environment, become static in the XR environment, etc. In some implementations, while process 500 is rendering the XR environment for the second user from the pivotable viewpoint, process 500 can render an avatar of the second user in a bubble or other virtual object floating on or near the representation of the first user.

At block 514, process 500 can receive input to stop rendering the XR environment according to the first data (i.e., to stop sharing the perspective of the first user with the second user on the 2D interface), and/or to stop rendering the XR environment according to the second data (i.e., to stop sharing the viewpoint pivotable about the location of the representation of the first user on the 2D interface). In implementations in which the avatar of the second user is rendered as a bubble floating near the representation of the first user, process 500 can receive a selection of the bubble by the second user via an input device (e.g., a click), thereby popping the bubble, which can be interpreted as input to stop rendering the XR environment based on the first data and/or the second data. In some implementations, the input to stop rendering the XR environment based on the first data and/or the second data can be a voice command from the second user. For example, a microphone collocated with or proximate to the 2D interface can detect an audio signal including a command, e.g., "stop following Player 123." One or more processors can perform speech recognition and/or natural language analysis on the audio signal in order to understand and process the command and translate it into input requesting that the second user stop following Player 123 in the XR environment on the 2D interface.

In some implementations, it is contemplated that that process 500 can disable the second user's ability to pop the bubble and thus stop rendering the XR environment based on the first data and/or the second data. In other words, in some implementations, process 500 can disable the second user's ability to resume independently interacting with the XR environment. In cases in which there are multiple users following the first user, such implementations can influence the number of active followers (i.e., those that can interact with the XR environment) and passive followers (i.e., those that cannot interact with the XR environment), or combinations thereof.

At block 516, process 500 can render the XR environment for the second user. In some implementations, process 500 can render the XR environment for the second user based on the position of the representation of the second user within the XR environment when the request to share the first user's perspective was transmitted, i.e., where the representation of the second user was located before following the first user. In some implementations, process 500 can render the XR environment for the second user based on a position of the representation of the first user when the input to stop rendering the XR environment according to the first data and/or the second data was received, i.e., where the representation of the first user was located when the second user stopped following the first user.

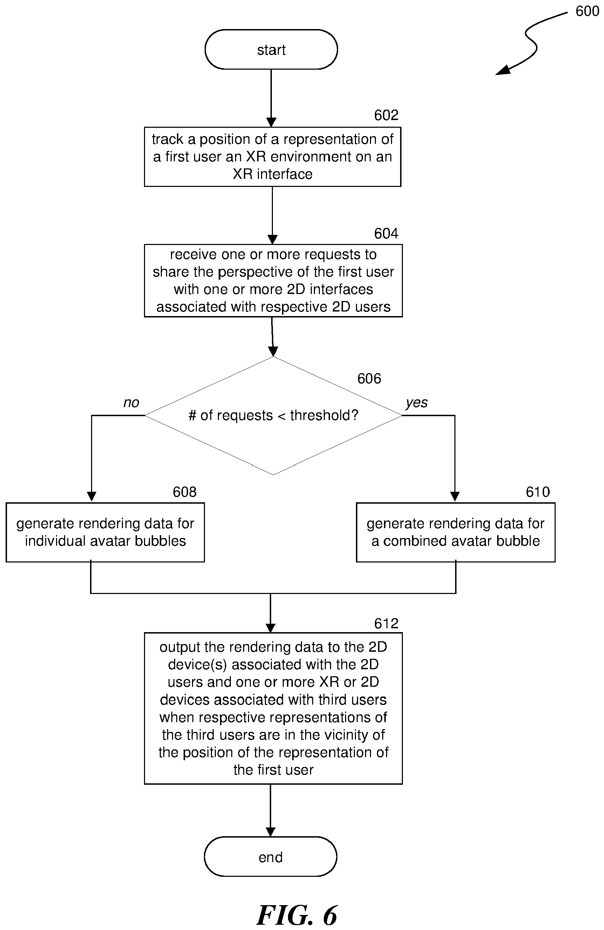

Figure 6 is a flow diagram illustrating a process used by a server in some implementations of the present technology for facilitating sharing a perspective of a first user, in an XR environment on an XR interface, with a second user accessing the XR environment from a two-dimensional (2D) interface. In some implementations, block 602 of process 600 can be performed as a response to the first user accessing the XR environment from the XR interface, while blocks 606-612 can be performed in response to one or more requests from respective one or more second users to share the perspective of the first user with the second user(s). In some implementations, process 600 can be executed by a server in operable communication with XR and 2D interfaces, devices, and/or accessing the XR environment. Although illustrated as having only one iteration, it is contemplated that process 600 (or any portion thereof) can be performed multiple times, repeatedly, consecutively, concurrently, in parallel, etc., as requests to share the perspective of a first user with one or more second users are received, or as requests to share the perspective of a different first user with one or more second users are received.

At block 602, process 600 can track a position of a representation of the first user in an XR environment on an XR interface. The first user can control and change the position of his representation via various input/output devices and interfaces, such as a controller, a microphone, a camera, various sensors of an inertial measurement unit (IMU), etc. Based on this input, process 600 can track where the first user has directed his representation to go, where his representation is facing, etc., in the XR environment with respect to virtual objects and backgrounds within the XR environment.

At block 604, process 600 can receive one or more requests to share the perspective of the first user with one or more 2D interfaces associated with respective 2D interface users. In some implementations, process 600 can receive at least some of the request(s) from one or more 2D devices or 2D interfaces within a 2D system associated with second user(s) wishing to follow the representation of the first user. In some implementations, process 600 can receive at least some of the request(s) from one or more XR devices or XR interfaces within an XR system associated with the first user, such that that the first user wishes for the second user to follow his representation. Although illustrated as a single step at block 604, it is contemplated that process 600 can receive requests to share the perspective of the first user concurrently or consecutively over a period of time.

In some implementations, process 600 can receive the request(s) to share the perspective of the first user with the second user via an option displayed in association with the representation of the first user, when the representation of the second user and the representation of the first user are in a same world in the XR environment. In some implementations, when the representation of the first user within the XR environment is within the field-of-view of the second user and/or within a predetermined distance of the representation of the first user, process 600 can cause the 2D interface to render a button, graphic, switch, pop-up, etc. that, upon selection, can generate and transmit the request to share the perspective of the first user.

In some implementations, process 600 can receive the request to share the perspective of the first user with the second user based on a selection of an option associated with the first user from a list of available users to follow, when the representation of the second user and the representation of the first user are not in a same world in the XR environment. For example, while the representation of a first user is in a virtual world and the representation of the second user is in a virtual lobby, process 600 can cause the 2D interface to display a list of all users in the virtual world (or a subset thereof, such as only those users that are available to follow, e.g., users on XR interfaces). Upon selection of the first user from the list, the 2D interface or device can generate the request to share the perspective of the first user based on selection of the option by the second user, and transmit the request.

At block 606, process 600 can determine whether the number of received requests is less than a threshold number of requests. In some implementations, the threshold can be a static integer, e.g., 5. In some implementations, the threshold can be dynamic and changeable based on any number of factors. For example, the threshold can be based on display size, amount and/or placement of virtual objects in the XR environment, amount and/or placement of representations of other users in the XR environment, amount of background space available, etc. For example, if the XR environment is crowded with representations of other players and/or virtual objects, process 600 can select a lower threshold. Conversely, if there is plenty of unused background space in the XR environment, process 600 can select a higher threshold.

If the number of received requests is less than a threshold, process 600 can continue to block 608. At block 608, process 600 can generate rendering data for individual avatar bubbles. Each of the individual avatar bubbles can be associated with a respective requesting second user. In some implementations, the size of the avatar bubbles can be static, i.e., always the same regardless of the number of requesting second users. In some implementations, the size of the avatar bubbles can be dynamic, i.e.., changeable based on any number of factors, such as the number of requesting second users, the order of the requests received, the seniority of the requesting second users within the XR environment, display size, amount and/or placement of virtual objects in the XR environment, amount and/or placement of representations of other users in the XR environment, amount of background space available, etc. For example, process 600 can generate rendering data for smaller individual avatar bubbles if the number of requests is large, or bigger individual avatar bubbles if the number of requests is small. In another example, process 600 can generate rendering data for a bigger avatar bubble associated with a more experienced second user, and a small avatar bubble associated with a rookie second user.

If the number of received requests is greater than or equal to a threshold, process 600 can continue to block 610. At block 610, process 600 can generate rendering data for a combined avatar bubble. The combined avatar bubble can include at least some of the avatars associated with respective requesting second users included in a single bubble. In some implementations, process 600 can generate the rendering data such that only a set number of avatars are displayed in the combined bubble, e.g., 6. In such implementations, it is contemplated that process 600 can generate the rendering data such that the combined avatar bubble can be expanded to show the remaining avatars (e.g., via selection of text saying "+15"), or a list of usernames associated with the additional requesting second users. In some implementations, process 600 can generate the rendering data such that the avatars displayed in the combined avatar bubble are selected based on any number of factors, such as the order of the requests received, the seniority of the requesting second users within the XR environment, etc., while the remaining avatars (or a list of usernames associated with the remaining avatars) are hidden.

At block 612, process 600 can output the rendering data to 2D devices associated with the respective requesting second users, such that the 2D devices can render the avatar bubble(s) on the respective 2D interfaces according to the rendering data. In some implementations, process 600 can output the rendering data to one or more other XR or 2D devices associated with third users, when respective representations of the third users are in the vicinity of the position of the representation of the first user. Thus, the XR or 2D interfaces associated with the third users can render and display the avatar bubble(s) in association with the representation of the first user when the representation of the first user is within or enters the field of view of the third user(s), and the third user(s) can understand that the first user is being followed by one or more second users.

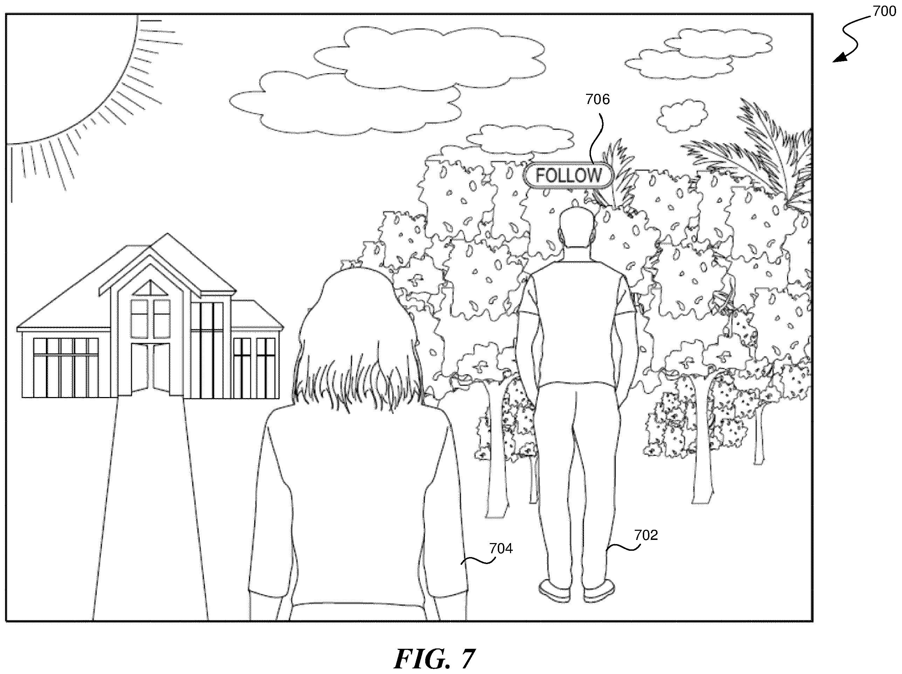

Figure 7 is a conceptual diagram illustrating an example of a view 700 of a third user accessing an XR environment on a 2D interface. View 700 can include a representation 702 of a first user accessing the XR environment from an XR interface and a representation 704 of a second user accessing the XR environment from a 2D interface. As shown in Figure 7, the 2D interface accessed by the third user, as well as the 2D interface accessed by the second user (not shown), can display an option 706 to follow the representation 702 of the first user. Although option 706 is shown as a button, it is contemplated that option 706 can alternatively or additionally include any graphic, switch, pop-up, etc. that, upon selection, can cause a 2D device in operable communication with the 2D interface (or the 2D interface itself) to generate a request to share the perspective of the first user. Alternatively, the second user and/or the third user can select to follow the first user using a voice command, gesture, or other UI element. The second user and/or the third user can select option 706 using any suitable method, such as by clicking option 706, pressing option 706 on a touch screen, audibly requesting to select option 706, etc. In some implementations, the second user and/or the third user may desire to follow the representation 702 of the first user because the first user has better peripheral vision of the XR environment, such as when the representation 702 of the first user enters a forest 708.

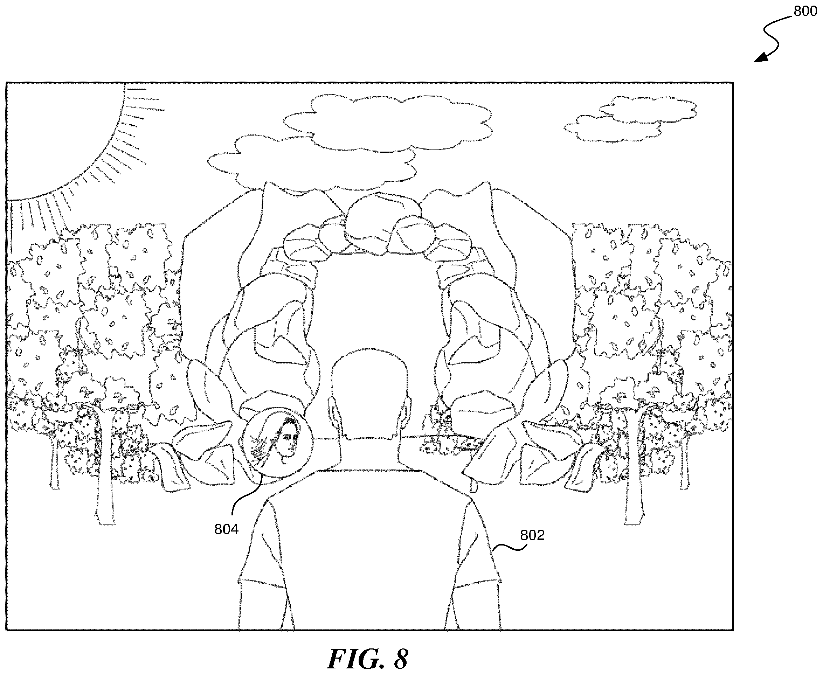

Figure 8 is a conceptual diagram illustrating an example of a view 800 of a third user accessing an XR environment on a 2D interface. View 800 can include a representation 802 of a first user accessing the XR environment from an XR interface while sharing his perspective with a second user on a 2D interface. In some implementations, a server, the 2D interface of the third user, and/or a 2D device in operable communication with the 2D interface can render and display view 800 in response to a selection by the second user to follow the representation 802 of the first user in the XR environment, such as by selecting option 706 of Figure 7.

While following the representation 802 of the first user, an avatar bubble 804 associated with the second user can be displayed on the 2D interface proximate to the representation 802 of the first user. Avatar bubble 804 can indicate to the third user, and any other users having the representation 802 of the first user within their field-of-view, that the second user is following the representation 802 of the first user. Although shown from the perspective of the third user on a 2D interface, it is contemplated that a similar view 800 can be displayed on XR interface(s) being used to access the XR environment by other users having the representation 802 of the first user within their field-of-view. In some implementations, the second user can share the viewpoint of the first user while following the representation 802 of the first user. In some implementations, the second user can have a viewpoint different than the first user, but pivotable about the location of the representation 802 of the first user.

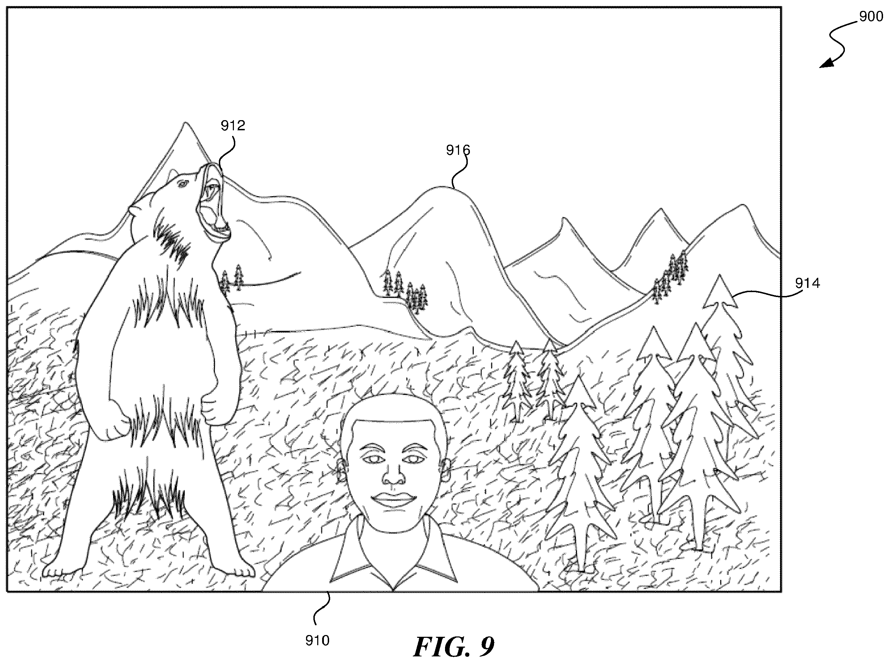

Figure 9 is a conceptual diagram illustrating an example of a view 900 of a second user viewing an XR environment on a 2D interface. View 900 of the second user is not the same as the view of the representation of the first user being followed, but rather a view pivotable about a location of a representation of the first user accessing the XR environment from an XR interface. For example, a 2D device and/or the 2D interface used by the second user can receive input to turn the view to see behind the representation of the first user. Behind the representation of the first user, view 900 includes a representation 910 of a third user accessing the XR environment on a 2D interface, such as the same third user having view 700 and/or 800 of Figures 7 and 8, respectively. View 900 further includes virtual objects in the XR environment located behind the representation of the first user, such as bear 912, trees 914, and mountains 916. In some implementations, although the second user is able to pivot view 900 about the location of the representation of the first user, the representation of the second user may be unable to interact with the XR environment.

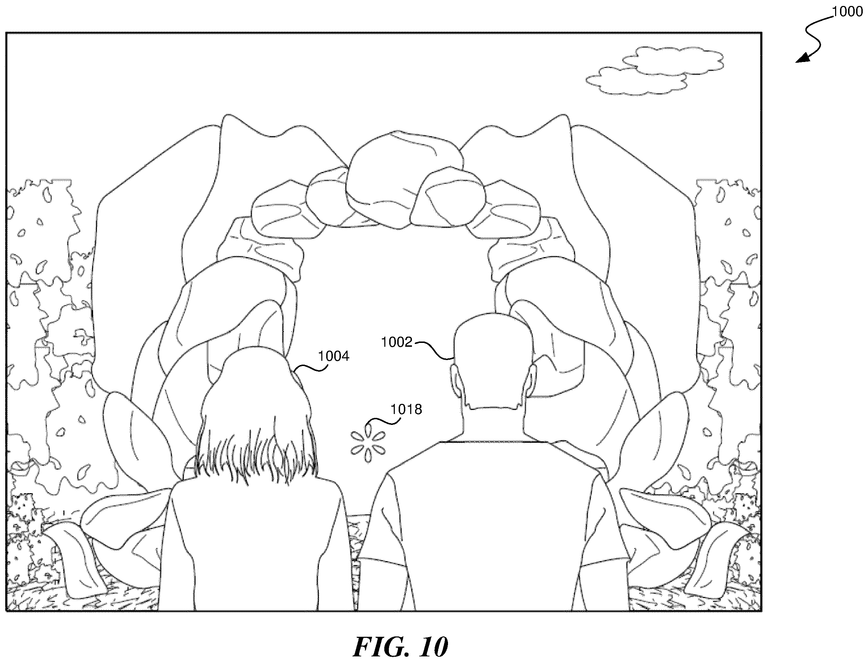

Figure 10 is a conceptual diagram illustrating an example of a view 1000 of a third user accessing an XR environment on a 2D interface. View 1000 can include a representation 1002 of a first user accessing the XR environment from an XR interface and a representation 1004 of a second user accessing the XR environment from a 2D interface when the second user stops following the first user. For example, the second user can "pop" her avatar bubble, such as avatar bubble 804 of Figure 8, by selection of the avatar bubble through a click, touch on a touch screen, audible instruction to stop following representation 1002 of the first user, etc. In some implementations, view 1000 can show an icon 1018 showing that the second user has popped her avatar bubble.

Upon popping of the avatar bubble, the representation 1004 of the second user can reenable the ability to virtually move around independently and interact with the XR environment, without being locked to the representation 1002 of the first user. In some implementations, such as is shown in Figure 10, the representation 1004 of the second user can be displayed at a location proximate to the representation 1002 of the first user when the second user popped the bubble. In other implementations, however, the representation 1004 of the second user can be displayed at her last location prior to selecting to follow the representation 1002 of the first user, such as at the location of her representation 704 in Figure 7.

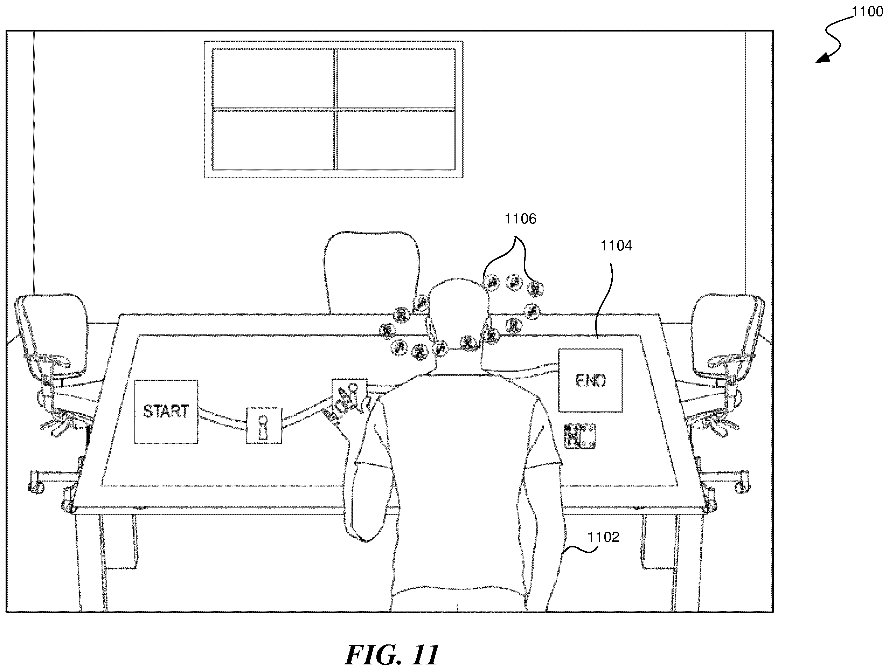

Figure 11 is a conceptual diagram illustrating an example of a view 1100 of a second user accessing an XR environment on a 2D interface. View 1100 can include a representation 1102 of a first user accessing the XR environment from an XR interface while sharing his perspective with other users on respective 2D interfaces. View 1100 can show the representation 1102 of the first user accessing a virtual game 1104 while being followed by the other users, as represented by avatar bubbles 1106. The other users can share the perspective of the representation 1102 of the first user in order to view the virtual game 1104 and view the actions of the representation 1102 of the first user in the virtual game 1104, without themselves interacting with the virtual game 1104. When it is the turn of another user, that user can pop his respective avatar bubble to interact with the virtual game 1104.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for sharing a perspective of a first user, in an XR environment on an XR interface, with a second user accessing the XR environment from a 2D interface, the method comprising:
rendering the XR environment on the 2D interface for the second user based on a position of a representation of the second user within the XR environment;
transmitting a request to share the perspective of the first user with the second user on the 2D interface, while a representation of the first user interacts with the XR environment based on input of the first user to an XR device;
receiving first data associated with the perspective of the first user in the XR environment;
rendering the XR environment on the 2D interface for the second user from the perspective of the first user based on the first data;
receiving second data associated with a viewpoint pivotable about a location of the representation of the first user in the XR environment;
rendering the XR environment for the second user on the 2D interface from the viewpoint based on the second data;
receiving input to stop rendering the XR environment based on the first data and/or the second data; and
rendering the XR environment for the second user based on either A) the position of the representation of the second user within the XR environment when the request was transmitted or B) a position of the representation of the first user when the input was received.

2. The method of claim 1,
wherein the representation of the second user is unable to interact with the XR environment when the XR environment is rendered for the second user based on the first data or the second data.

3. The method of claim 1 or claim 2, further comprising:
generating the request to share the perspective of the first user with the second user based on a voice command from the second user.

4. The method of any preceding claim, further comprising:
generating the request to share the perspective of the first user with the second user based on a selection of an option displayed in association with the representation of the first user, when the representation of the second user and the representation of the first user are in a same world in the XR environment.

5. The method of any preceding claim, further comprising:
generating the request to share the perspective of the first user with the second user based on a selection of an option associated with the first user from a list of available users to follow, when the representation of the second user and the representation of the first user are not in a same world in the XR environment.

6. A computer-readable storage medium storing instructions that, when executed by a computing system, cause the computing system to perform a process for sharing a perspective of a first user, in an XR environment on an XR interface, with a second user accessing the XR environment from a 2D interface, the process comprising:
rendering the XR environment on the 2D interface for the second user based on a position of a representation of the second user within the XR environment;
transmitting a request to share the perspective of the first user with the second user on the 2D interface;
receiving data associated with the perspective of the first user in the XR environment;
rendering the XR environment on the 2D interface for the second user from the perspective of the first user based on the data;
receiving input to stop rendering the XR environment based on the data; and
rendering the XR environment for the second user based on either A) the position of the representation of the second user within the XR environment when the request was transmitted or B) a position of a representation of the first user when the input was received.

7. A computing system for sharing a perspective of a first user, in an XR environment on an XR interface, with a second user accessing the XR environment from a 2D interface, the computing system comprising:
one or more processors; and
one or more memories storing instructions that, when executed by the one or more processors, cause the computing system to perform a process comprising:
rendering the XR environment on the 2D interface for the second user based on a position of a representation of the second user within the XR environment;
transmitting a request to share the perspective of the first user with the second user on the 2D interface;
receiving data associated with the perspective of the first user in the XR environment;
rendering the XR environment on the 2D interface for the second user from the perspective of the first user based on the data;
receiving input to stop rendering the XR environment based on the data; and
rendering the XR environment for the second user based on either A) the position of the representation of the second user within the XR environment when the request was transmitted or B) a position of a representation of the first user when the input was received.

8. The computing system of claim 7, further comprising:
a flat-panel display providing the 2D interface.

9. The computer-readable storage medium of claim 6 or the computing system of claim 7 or 8,
wherein the data is first data,
wherein the input is first input, and
wherein the process further comprises:
receiving second data associated with a viewpoint pivotable about a location of the representation of the first user in the XR environment;
rendering the XR environment for the second user on the 2D interface from the viewpoint based on the second data; and
receiving second input to stop rendering the XR environment based on the second data.

10. The computer-readable storage medium of claim 6 or the computing system of claim 7 or 8,
wherein the request to share the perspective of the first user with the second user on the 2D interface is transmitted while the representation of the first user interacts with the XR environment based on input of the first user to an XR device.

11. The computer-readable storage medium of claim 6 or the computing system of claim 7 or 8,
wherein the representation of the second user is unable to interact with the XR environment when the XR environment is rendered for the second user based on the data.

12. The computer-readable storage medium of claim 6 or the computing system of claim 7 or 8, wherein the process further comprises:
generating the request to share the perspective of the first user with the second user based on a voice command from the second user.

13. The computer-readable storage medium of claim 6 or the computing system of claim 7 or 8, wherein the process further comprises:
generating the request to share the perspective of the first user with the second user based on a selection of an option displayed in association with the representation of the first user, when the representation of the second user and the representation of the first user are in a same world in the XR environment.

14. The computer-readable storage medium of claim 6 or the computing system of claim 7 or 8, wherein the process further comprises:
generating the request to share the perspective of the first user with the second user based on a selection of an option associated with the first user from a list of available users to follow, when the representation of the second user and the representation of the first user are not in a same world in the XR environment.
